# EUROPÄISCHE PATENTANMELDUNG

(11) **EP 1 391 282 A2**
(43) Veröffentlichungstag der Anmeldung: **25.02.2004**
(21) Anmeldenummer: 03017653.1
(22) Anmeldetag: 13.08.2003
(51) Int. Cl.: B29C 44/12

(54) **Verfahren zum Herstellen einer Fahrzeuginnenraumverkleidung sowie Fahrzeuginnenraumverkleidung**

(30) Priorität: 19.08.2002 DE 10237837
(71) Anmelder: ArvinMeritor GmbH, 63128 Dietzenbach (DE)
(72) Erfinder: Schönebeck, Horst, 63571 Gelnhausen (DE)
(74) Vertreter: Kitzhofer, Thomas, Dipl.-Ing.

(57) **Zusammenfassung**

Ein Verfahren zum Herstellen einer sehr gut schallabsorbierenden und zudem luftdurchlässigen Fahrzeuginnenraumverkleidung, insbesondere eines Dachhimmels, mit einer außenseitigen Dekorschicht (10), einer zur Dekorschicht (10) rückseitig angeordneten Sperrschicht (12) und einer unmittelbar an die Sperrschicht (12) angrenzenden, durch Hinterschäumen hergestellten Schicht (14), ist durch folgende Schritte gekennzeichnet:
a) als Sperrschicht (12) wird ein luftdurchlässiges Zellulosevlies verwendet,
b) die Sperrschicht (12) wird rückseitig hinterschäumt,
wobei die Sperrschicht so ausgebildet ist, daß bei der Hinterschäumung auf die Sperrschicht (12) aufgebrachter Kunststoff die Sperrschicht (12) nicht durchdringt, und wobei die entstehende Einheit aus Sperrschicht (12) und durch Hinterschäumen hergestellter Schicht nach dem Aushärten luftdurchlässig ist.

## Beschreibung

Die Erfindung betrifft ein Verfahren zum Herstellen einer Fahrzeuginnenraumverkleidung, insbesondere eines Dachhimmels, mit einer außenseitigen Dekorschicht, einer dazu rückseitig angeordneten Sperrschicht und einer unmittelbar an die Sperrschicht angrenzenden, durch Hinterschäumen hergestellten Schicht. Darüber hinaus betrifft die Erfindung eine durch das erfindungsgemäße Verfahren hergestellte Fahrzeuginnenraumverkleidung.

Im Stand der Technik werden Fahrzeuginnenraumverkleidungen üblicherweise folgendermaßen hergestellt. Eine Dekorschicht, insbesondere ein Textil, wird rückseitig kaschiert, indem eine weiche Kunststoffschicht aufgetragen wird. Dies soll dem späteren Fahrzeuginnenraumverkleidungsteil einen sogenannten Softtouch, also eine höherwertige Haptik geben. Rückseitig wird auf die weiche Schicht eine sogenannte Sperrfolie aufgeklebt. Das so entstandene Zwischenprodukt wird dann mit PU-Material hinterschäumt, wobei die Sperrfolie verhindert, daß flüssiges PU-Material in die weiche Kunststoffschicht und in die Textilschicht eindringt und sich von außen abzeichnet. An Fahrzeuginnenraumverkleidungsteile werden zunehmend höhere Ansprüche gerade bezüglich Schallabsorptionsvermögen gestellt. An der Sperrfolie kann der Schall teilweise reflektieren.

Die Erfindung schafft ein Verfahren zum Herstellen einer Fahrzeuginnenraumverkleidung, das sehr einfach durchgeführt werden kann. Die erfindungsgemäße Fahrzeuginnenraumverkleidung zeichnet sich zudem durch einen einfachen Aufbau, ein gesteigertes Schallabsorptionsvermögen sowie eine Luftdurchlässigkeit aus. Ferner ist die Qualitätsanmutung der einer Fahrzeuginnenraumverkleidung nach dem oben genannten Stand der Technik zumindest ebenbürtig.

Das erfindungsgemäße Verfahren ist durch folgende Schritte gezeichnet:
a) als Sperrschicht wird ein luftdurchlässiges Zellulosevlies verwendet,
b) die Sperrschicht wird rückseitig hinterschäumt,
wobei die Sperrschicht so ausgebildet ist, daß bei der Hinterschäumung auf die Sperrschicht aufgebrachter Kunststoff die Sperrschicht nicht durchdringt, und wobei die entstehende Einheit aus Sperrschicht und durch Hinterschäumen hergestellter Schicht nach dem Aushärten luftdurchlässig ist. Das luftdurchlässige Zellulosevlies ist sehr einfach und kostengünstig herstellbar, indem zum Beispiel die Vliesfasern aus Zellulose durch ein Bindemittel verbunden werden. Das Vlies kann auf Papierfertigungsstraßen produziert werden, wobei die Luftdurchlässigkeit sehr gut einstellbar ist. Beim erfindungsgemäßen Verfahren wird die Sperrfolie komplett weggelassen, so daß Schall bis in die dicke Schicht, die durch Hinterschäumung hergestellt wird, dringen kann. Das Verkleidungsteil hat somit ein größeres Schallabsorptionsvermögen. Die Sperrwirkung wird durch die preisgünstige Sperrschicht aus einem luftdurchlässigen Zellulosevlies gebildet.

Vorzugsweise wird ein Zwischenprodukt hergestellt, das eine Dekorschicht und eine Sperrschicht aufweist, wobei zusätzlich auch noch eine weiche Zwischenschicht aus Schaumstoff zur Erzielung des "Softtouch" vorgesehen sein kann. Dieses Zwischenprodukt wird dann im Schritt b) hinterschäumt. Einige der Schichten des Zwischenprodukts, vorzugsweise sogar alle, werden durch Verkleben miteinander verbunden. Dieses Verkleben kann beispielsweise durch einen thermoplastischen, pulverförmigen Kleber erfolgen, der auf zumindest eine der zu verbindenden Schichten aufgebracht wird.

Natürlich kann das Zwischenprodukt, allgemeiner gesprochen, auch durch Kaschieren hergestellt werden.

Die Zellulosefasern sind zum Beispiel Sisalfasern.

Das als Sperrschicht verwendete Vlies hat vorzugsweise ein Flächengewicht von 50 bis 200 g/m², was sich bei Versuchen als besonders vorteilhaft herausgestellt hat.

Das als Sperrschicht verwendete Vlies hat ferner vorzugsweise eine Luftdurchlässigkeit von etwa 55 bis 120 1 pro 100 cm².

Optional kann rückseitig in die durch Hinterschäumen hergestellte Schicht eine Fasermatte, z.B. eine Glasfasermatte oder Matte aus Naturfasern, beim Hinterschäumen eingebettet werden.

Die Fasermatte kann aber rückseitig auf die durch Hinterschäumen hergestellte Schicht aufgebracht werden, wobei über die Fasermatte das Verkleidungsteil am Fahrzeug befestigt werden kann.

Für die Hinterschäumung wird vorzugsweise PU-Material verwendet.

Als Dekorschicht kommen insbesondere Stoff (Textilgewebe) und Kunstleder in Frage, wobei das Kunstleder aber luftdurchlässig ausgeführt ist und damit die Gefahr bestünde, daß sich bei rückseitigem Kontakt mit flüssigem PU-Material dieses vorderseitig, also zum Fahrzeuginnenraum, abzeichnet. Das Kunstleder ist beispielsweise ein mit Löchern versehenes Glattleder oder künstliches Wildleder.

Die Erfindung betrifft darüber hinaus, wie bereits erwähnt, eine Fahrzeuginnenraumverkleidung, insbesondere einen Dachhimmel, der durch das erfindungsgemäße Verfahren hergestellt ist, und einen Schichtaufbau, der von der Innenseite aus beginnend, aus einer Dekorschicht, einer rückseitig hierzu vorgesehenen Sperrschicht aus luftdurchlässigem Zellulosevlies und einer sich wiederum vorzugsweise unmittelbar anschließenden, durch Hinterschäumen hergestellten Kunststoffschicht besteht, und der ohne eine Sperrfolie auskommt.

Weitere Merkmale und Vorteile der Erfindung ergeben sich aus der nachfolgenden Beschreibung und aus den Zeichnungen. In den Zeichnungen zeigen:
- Figur 1 eine Querschnittsansicht durch einen Abschnitt einer erfindungsgemäßen Fahrzeuginnenraumverkleidung in Form eines Dachhimmels,
- Figur 2 eine Querschnittsansicht durch eine Fahrzeuginnenraumverkleidung gemäß einer zweiten Ausführungsform, und
- Figur 3 eine Tabelle mit den physikalischen Eigenschaften des bevorzugt verwendeten Vlieses.

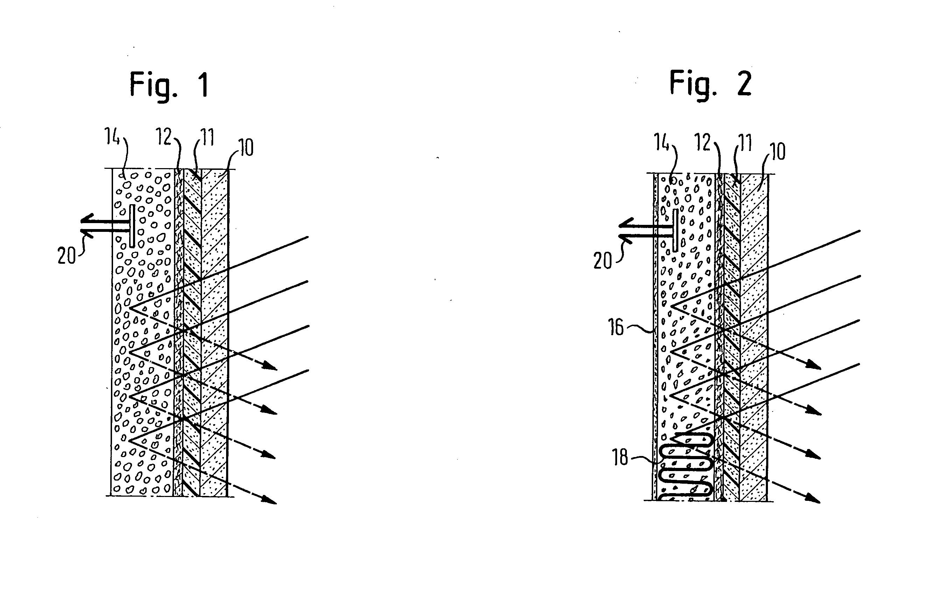

In Figur 1 ist eine Fahrzeuginnenraumverkleidung in Form eines Dachhimmels als Teil eines gesamten Dachmoduls abschnittsweise im Schnitt dargestellt. Die Fahrzeuginnenraumverkleidung ist großflächig ausgeführt und über nahezu die gesamte oder die gesamte Fläche wie in dem Ausschnitt dargestellt aufgebaut. Zum Fahrzeuginnenraum hin ist nur die aus luftdurchlässigem Stoff oder luftdurchlässigem Kunstleder gebildete Dekorschicht 10 sichtbar. Rückseitig schließt sich unmittelbar an die Dekorschicht eine Zwischenschicht 11 aus einem geschnittenen, weichen Schaumstoff, und an diese wiederum unmittelbar eine Sperrschicht 12 an. Rückseitig schließt sich wiederum unmittelbar an die Sperrschicht 12 eine Schicht 14 an, welche aus PU-Material besteht und durch Hinterschäumung unmittelbar auf die Sperrschicht 12 aufgebracht ist.

Die Sperrschicht 12 ist aus einem luftdurchlässigen Zellulosevlies hergestellt, wobei die Vliesfasern durch ein Bindemittel miteinander verbunden sind. Vorzugsweise wird Sisal verwendet. Das Flächengewicht des unverarbeiteten Vlieses beträgt etwa 50 bis 200 g/m² und die Luftdurchlässigkeit etwa 55 bis 1201 pro 100 cm².

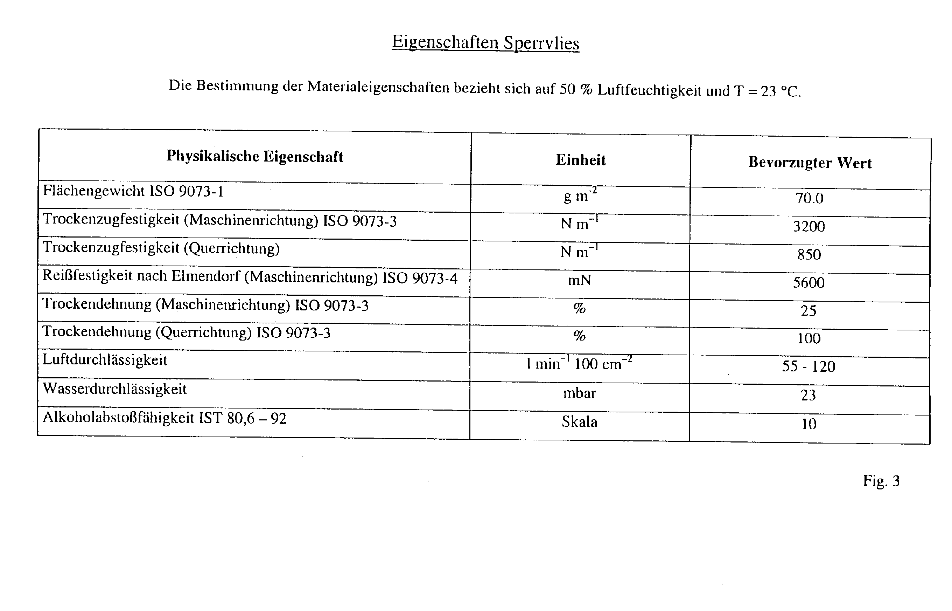

Weitere physikalische Eigenschaften der bevorzugten Ausführungsform des Vlieses sind in Figur 3 aufgeführt. Das Vlies ist mit einem solchen Flächengewicht und einer solchen Dichte und Dicke ausgeführt, daß unmittelbar auf die Sperrschicht 12 rückseitig aufgetragenes flüssiges PU-Material die Sperrschicht 12 beim Schäumprozeß nicht durchdringt.

Das Verfahren zum Herstellen der Fahrzeuginnenraumverkleidung wird im folgenden beschrieben. Zuerst werden Dekorschicht 10, Zwischenschicht 11 und Sperrschicht 12 miteinander zur Bildung eines Zwischenprodukts verbunden, was durch Kaschieren oder, genauer, durch Verkleben mittels eines thermoplastischen Klebers erfolgen kann. Dieser als Pulver vorliegende Kleber wird zumindest auf eine der zu verbindenden Schichten aufgebracht. Durch Erwärmen werden die Schichten dann miteinander verbunden.

Anschließend wird dieses Zwischenprodukt in eine Schäumform eingelegt, und rückseitig wird flüssiges PU-Material zur Hinterschäumung des Zwischenprodukts eingebracht.

Die Sperrschicht 12 ist so gewählt, daß kein flüssiges PU-Material beim Hinterschäumen die Sperrschicht 12 komplett durchdringt und bis zur Zwischenschicht 11 oder Dekorschicht 10 gelangt und so keine Gefahr besteht, daß sich das PU-Material an der Außenseite der Dekorschicht 10 abzeichnet.

Da keine Sperrfolie vorhanden ist und die gesamte Innenraumverkleidung nach dem Schäumen und Aushärten insgesamt luftdurchlässig ist, ohne daß nachfolgende Verfahrensschritte zur Erzielung der Luftdurchlässigkeit vorzusehen sind, zeichnet sich die Innenraumverkleidung durch ein hohes Schallabsorptionsvermögen aus. Die dargestellten Pfeile sollen auftreffende und teilweise reflektierte Schallwellen symbolisieren.

Optional kann die Zwischenschicht 11 auch weggelassen werden, so daß die Dekorschicht 10 rückseitig unmittelbar mit der Sperrschicht 12 verbunden ist, vorzugsweise durch das oben beschriebene Kleben mit thermoplastischem Klebematerial. Das Vlies zur Erzeugung der Sperrschicht kann dabei auch dicker ausgeführt sein, um den "Softtouch" zu bewerkstelligen.

Die Ausführungsform nach Figur 2 entspricht in ihrem Aufbau sowie in ihrem Herstellungsverfahren weitgehend der gerade erläuterten, so daß für gleiche Schichten die bereits eingeführten Bezugszeichen verwendet werden.

Rückseitig ist bei dieser Ausführungsform jedoch zur Erhöhung der Stabilität und zum erleichterten Anbringen an ein angrenzendes Fahrzeugteil (z.B. den Rest des Dachmoduls) eine Fasermatte 16 vorgesehen. Diese Fasermatte 16 wird entweder rückseitig auf der durch Hinterschäumung hergestellten Schicht 14 befestigt oder mit in die Schäumform gelegt und damit in den Schaum eingebettet.

Alternativ kann die Fasermatte 16 auch entfallen und anstatt dessen Fasern, insbesondere Glasfasern, in die Schicht 14 beim Schäumprozess eingebracht werden, beispielsweise in sogenannten LFI-Verfahren (Long-Fibre-Injection). In diesem Fall sollte die Sperrschicht 12 auch darauf ausgelegt sein, ein Durchdringen der eingeschossenen Fasern zur Zwischenschicht 11 oder bis zur Dekorschicht 10 hin zu verhindern.

Es kann neben einer Glasfasermatte natürlich auch eine Naturfasermatte oder eine andere Kunstfasermatte vorgesehen sein.

In die Schicht 14 kann auch ein sogenannter Abstandshalter 18 eingebettet sein, der dazu dient, die Fasermatte 16 und die Sperrschicht 12 definiert zu beabstanden, wenn die Schicht 14 ausgebildet wird. Der Abstandshalter 18 weist vorzugsweise eine gewisse Federwirkung auf.

In Figur 2 ist der Abstandshalter 18 lediglich schematisch durch eine doppelte Wellenlinie dargestellt. Der Abstandshalter 18 kann zum Beispiel aus einer Kunststoffmatte bestehen, deren sehr offene Zellstruktur ein unregelmäßiges Raumgitter ausbildet, welches im Aussehen einem osteoporösen Knochengewebe ähnelt. Vorzugsweise handelt es sich bei dem Abstandshalter 18 um einen unter Stickstoffbeaufschlagung aufgeschäumten PU-Polyester, der nach dem Aufschäumen eine geringe Rohdichte von ca. 20 kg/m³, eine Stauchhärte von ungefähr 20 kPa, eine Zellenanzahl von ca. 13 Zellen pro cm³, eine Zugfestigkeit von etwa 230 kPa und eine Bruchdehnung von ungefähr 70% aufweist.

Nach dem Herstellen des Zwischenprodukts werden Zwischenprodukt, Abstandshalter 18 und Fasermatte 16 in die Schäumform eingelegt und darin positioniert.

Diese Positionierung kann zum Beispiel in der oberen Formhälfte und mittels eines Spannrahmens erfolgen, so daß sich die Sperrschicht 14 auf der der unteren Formhälfte zugewandten Seite der oberen Formhälfte befindet. Sodann wird die in einem Mischkopf durchmischte, wasserähnliche flüssige PU-Kunststoffmasse auf die Fasermatte 16 aufgetragen. Die flüssige Kunststoffmasse durchtränkt sofort die Fasermatte 16 und den Abstandshalter 18 und gelangt in umittelbaren Kontakt mit der Sperrschicht 12, in die sie teilweise eindringt. Anschließend wird die obere Formhälfte der Schäumform auf die untere Formhälfte gelegt und die Schäumform dicht geschlossen. Der Abstandshalter 18 sorgt aufgrund seiner elastischen Eigenschaften in Verbindung mit den Verdrängungskräften des auftreibenden Kunststoffschaums dafür, daß sich die gegebenenfalls strukturierten Oberflächen der Formhälften abbilden. Nach Verstreichen einer gewissen Reaktionszeit wird die Schäumform geöffnet und die im Ergebnis einstückige Fahrzeuginnenraumverkleidung aus der Schäumform herausgenommen.

Wie gerade erläutert ist es wichtig, daß der flüssige Kunststoff ohne Probleme den Abstandshalter 18 durchdringen kann, so daß beim Hinterschäumprozeß der für die Schicht 14 hergestellte Schaum eine Verbindung zwischen der Sperrschicht 12, der Fasermatte 16 und dem Abstandshalter 18 herbeiführt.

Auch bei der Ausführungsform nach Figur 2 kann die Zwischenschicht 11 ersatzlos entfallen.

Zur vereinfachten Montage der Fahrzeuginnenraumverkleidung können Befestigungsmittel 20 (zum Beispiel Rastelemente, Ösen, Haken etc.) beim Schäumen in die Schicht 14 eingebettet werden.

## Patentansprüche

1. Verfahren zum Herstellen einer Fahrzeuginnenraumverkleidung, insbesondere eines Dachhimmels, mit einer außenseitigen Dekorschicht (10), einer zur Dekorschicht (10) rückseitig angeordneten Sperrschicht (12) und einer unmittelbar an die Sperrschicht (12) angrenzenden, durch Hinterschäumen hergestellten Schicht (14), **gekennzeichnet durch** folgende Schritte:
a) als Sperrschicht (12) wird ein luftdurchlässiges Zellulosevlies verwendet,
b) die Sperrschicht (12) wird rückseitig hinterschäumt,
wobei die Sperrschicht so ausgebildet ist, daß bei der Hinterschäumung auf die Sperrschicht (12) aufgebrachter Kunststoff die Sperrschicht (12) nicht durchdringt, und wobei die entstehende Einheit aus Sperrschicht (12) und **durch** Hinterschäumen hergestellter Schicht nach dem Aushärten luftdurchlässig ist.

2. Verfahren nach Anspruch 1, **dadurch gekennzeichnet, daß** ein Zwischenprodukt, das die Dekorschicht (10) und die Sperrschicht (12) aufweist, hergestellt und anschließend im Schritt b) hinterschäumt wird.

3. Verfahren nach Anspruch 2, **dadurch gekennzeichnet, daß** das Zwischenprodukt eine weiche Zwischenschicht (11) aus Schaumstoff zwischen der Dekorschicht (10) und der Sperrschicht (12) aufweist.

4. Verfahren nach Anspruch 2 oder 3, **dadurch gekennzeichnet, daß** zumindest einige der Schichten des Zwischenproduktes durch Verkleben miteinander verbunden werden.

5. Verfahren nach Anspruch 4, **dadurch gekennzeichnet, daß** ein thermoplastischer, pulverförmiger Kleber zur Verbindung der Schichten auf zumindest eine der Schichten aufgebracht wird.

6. Verfahren nach einem der Ansprüche 2 bis 5, **dadurch gekennzeichnet, daß** das Zwischenprodukt durch Kaschieren hergestellt wird.

7. Verfahren nach einem der vorhergehenden Ansprüche, **dadurch gekennzeichnet, daß** das Vlies aus Zellulosefasern besteht, die durch ein Bindemittel miteinander verbunden sind.

8. Verfahren nach Anspruch 7, **dadurch gekennzeichnet, daß** die Zellulosefasern Sisalfasern sind.

9. Verfahren nach einem der vorhergehenden Ansprüche, **dadurch gekennzeichnet, daß** das als Sperrschicht (12) verwendete Vlies ein Flächengewicht von 50 bis 200 g/m² hat.

10. Verfahren nach einem der vorhergehenden Ansprüche, **dadurch gekennzeichnet, daß** das als Sperrschicht (12) verwendete Vlies eine Luftdurchlässigkeit von etwa 55 bis 120 pro 100 cm² aufweist.

11. Verfahren nach einem der vorhergehenden Ansprüche, **dadurch gekennzeichnet, daß** rückseitig auf oder in die durch Hinterschäumen hergestellte Schicht (14) eine Fasermatte (16) aufgebracht bzw. eingebettet wird.

12. Verfahren nach einem der vorhergehenden Ansprüche, **dadurch gekennzeichnet, daß** bei der Hinterschäumung der flüssige Kunststoff unmittelbar auf die Sperrschicht (12) aufgebracht wird und mit ihr in Kontakt kommt.

13. Verfahren nach einem der vorhergehenden Ansprüche, **dadurch gekennzeichnet, daß** Fasern, insbesondere Glasfasern, beim Hinterschäumen eingebracht und in der entstehenden Schicht (14) verteilt werden.

14. Verfahren nach einem der vorhergehenden Ansprüche, **dadurch gekennzeichnet, daß** PU-Material für die Hinterschäumung verwendet wird.

15. Verfahren nach einem der vorhergehenden Ansprüche, **dadurch gekennzeichnet, daß** Stoff oder Kunstleder als Dekorschicht (10) verwendet wird.

16. Verfahren nach einem der vorhergehenden Ansprüche, **dadurch gekennzeichnet, daß** die gesamte Fahrzeuginnenraumverkleidung luftdurchlässig ist.

17. Verfahren nach einem der vorhergehenden Ansprüche, **dadurch gekennzeichnet, daß** in die durch Hinterschäumen hergestellte Schicht (14) ein vorgefertigter Abstandshalter (18) eingebettet wird.

18. Verfahren nach einem der vorhergehenden Ansprüche, **dadurch gekennzeichnet, daß** in die durch Hinterschäumen hergestellte Schicht (14) ein vorgefertigtes Befestigungsmittel (20) eingebettet wird.

19. Fahrzeuginnenraumverkleidung, hergestellt durch das Verfahren nach einem der vorhergehenden Ansprüche.
